# EUROPÄISCHE PATENTANMELDUNG

(11) **EP 4 659 563 A1**
(43) Veröffentlichungstag der Anmeldung: **10.12.2025**
(21) Anmeldenummer: 25175070.9
(22) Anmeldetag: 08.05.2025
(51) Int. Cl.: A01G 3/053

(54) **WERKZEUGANTRIEBSEINHEIT FÜR EIN SCHNEIDMESSER EINES HANDGEHALTENEN ARBEITSGERÄTS, SOWIE HANDGEHALTENES ARBEITSGERÄT MIT DER WERKZEUGANTRIEBSEINHEIT**

(30) Priorität: 07.06.2024 DE 102024115954
(71) Anmelder: Andreas Stihl AG & Co. KG, 71336 Waiblingen (DE)
(72) Erfinder: Reichle, Tobias, 70619 Stuttgart (DE); Härtenstein, Lars, 70771 Leinfelden-Echterdingen (DE); Petersen, Björn, 71723 Großbottwar (DE); Nefzger, Markus, 71364 Winnenden (DE)
(74) Vertreter: Reinhardt, Annette

(57) **Zusammenfassung**

Es wird eine Werkzeugantriebseinheit (1) für ein Schneidmesser (131,132) eines handgehaltenen Arbeitsgeräts (100) angegeben, umfassend einen Elektromotor (3), der ausbildet ist, ein Antriebsritzel (10) mit einer Antriebsdrehzahl zu rotieren, ein Getriebegehäuse (14), ein im Getriebegehäuse (14) angeordnetes Planetengetriebe (30), mit einem einzigen Hohlrad (36), einem einzigen Planetenträger (34) und Planeten (32), die durch das Antriebsritzel (10) angetrieben sind, eine Exzenterwelle (50), die durch das Planetengetriebe (30) mit einer Abtriebsdrehzahl angetrieben ist und ausgebildet ist mindestens ein Schneidwerkzeug (131,132) oszillierend anzutreiben, wobei die Planeten (32) jeweils einen ersten Umfangsabschnitt (41) und einen zweiten Umfangsabschnitt (42) aufweisen, wobei ein erster Durchmesser (d₁₎ des ersten Umfangsabschnitts (41) größer als ein zweiter Durchmesser (d₂) des zweiten Umfangsabschnitts (42) ist, wobei der erste Umfangsabschnitt (41) ausschließlich mit dem Antriebsritzel (10) in Eingriff steht und der zweite Umfangsabschnitt (42) ausschließlich mit dem Hohlrad (36) in Eingriff steht, und die Werkzeugantriebseinheit (1) eine Schwungmasse (7) aufweist, die mit dem Antriebsritzel (10) drehfest verbunden ist. Weiterhin wird ein handgehaltenes Arbeitsgerät (100) angegeben das die Werkzeugantriebseinheit (1) umfasst.

## Beschreibung

Die Erfindung betrifft eine Werkzeugantriebseinheit für ein Schneidmesser eines handgehaltenen Arbeitsgeräts, sowie ein handgehaltenes Arbeitsgerät mit der Werkzeugantriebseinheit.

Werkzeugantriebseinheiten für Schneidmesser handgehaltener Arbeitsgeräte, wie Heckenscheren, sind im Stand der Technik in verschiedenen Ausführungen bekannt. Allen gemein ist die Umwandlung einer kontinuierlichen rotatorischen Bewegung des Elektromotors in eine oszillierende Bewegung des mindestens einen angetriebenen Schneidmessers durch ein Exzentergetriebe. Ein zweites Schneidmesser kann ortsfest angeordnet sein oder ebenfalls angetrieben sein. Üblicherweise weist das Schneidmesser entweder eine Kulisse auf, in die ein Exzenter der Exzenterwelle eingreift, oder es ist ein Pleuel zwischen Messer und Exzenter angerordnet. Die rotatorische Bewegung der Exzenterwelle wird in eine hin- und her gehende Bewegung des mindestens einen angetriebenen Schneidmessers umgewandelt. Je nach Arbeitsaufgabe bestehen unterschiedliche Anforderungen an Schnittfrequenz und Schnittenergie. Die Schnittfrequenz ist nach oben hin begrenzt, da das zu schneidende Schnittgut bei zu hoher Schnittfrequenz nicht mehr schafft in den sich öffnenden Schnittspalt einzufallen.

Im Zuge der Elektrifizierung der Heckenschere werden höhere Antriebsdrehzahlen zur Verfügung gestellt als mit einem konventionellen Verbrennungsmotor. Planetengetriebe benötigen gegenüber Stirnradgetrieben weniger Bauraum, um die gleiche Übersetzung bereitzustellen. Daher finden zunehmend ein- oder mehrstufige Planetengetriebe Anwendung, um die hohen Antriebsdrehzahlen zu reduzieren. Mit mehrstufigen Planetengetrieben lassen sich hohe Übersetzungen realisieren, jedoch sind sie aufgrund ihrer mindestens zwei Sätze an Hohlrädern, Planetenträgern und Planeten deutlich schwerer als einstufige Planetengetriebe. Daher kann eine längere Benutzung des Arbeitsgeräts als unergonomisch empfunden werden. Zudem sind durch die Vielzahl an Bauteilen die Kosten für das Getriebe und dessen Montage erhöht.

Einstufige Planetengetriebe weißen zwar ein geringeres Gewicht als mehrstufige Planetengetriebe auf, sind dafür jedoch mitunter nicht in der Lage im gleichen radialen Bauraum eine ausreichend hohe Übersetzung ins Langsame zu erzielen, um ein Einfallen des Schnittguts auch bei hoher Antriebsdrehzahl sicherzustellen. Durch das umgebende Gerätegehäuse kann das Hohlrad nicht beliebig im Durchmesser vergrößert werden, um dadurch die Übersetzung zu erhöhen.

Je höher das Trägheitsmoment und die Winkelgeschwindigkeit der rotierenden Getriebeelemente ist, umso mehr Energie lässt sich im Antriebsstrang speichern. Dies ist insbesondere für Werkzeugantriebseinheiten für oszillierend angetriebene Schneidwerkzeuge von Bedeutung, da diese einen variierenden Geschwindigkeits-/Kraft bzw. Momenten-Verlauf aufweisen. Je nach Dicke, Härte und Zeitpunkt des einfallenden Schnittguts neigen die Schneidwerkzeuge zum Blockieren, sofern die zu diesem Zeitpunkt aufbringbare Schnittenergie nicht zum Durchtrennen des Schnittguts ausreicht. Durch im Antriebsstrang gespeicherte Energie lässt sich die Leistungsfähigkeit des Arbeitsgeräts erhöhen. Daher sind hohe Drehzahlen rotierender Massen für die Leistungsfähigkeit des Arbeitsgeräts zweckmäßig. Auf der anderen Seite sollte die Werkzeugantriebseinheit jedoch auch möglichst leicht sein, um ein ergonomisches Arbeiten mit dem Arbeitsgerät zu ermöglichen.

Eine weitere Herausforderung ist die Belastung der Lagerstellen der Planeten der ersten bzw. einzigen Planetenstufe am Planetenträger bei sehr hohen Antriebsdrehzahlen. Je höher die Antriebsdrehzahl eines die Planeten antreibenden Antriebsritzels ist, umso schneller laufen die Planeten um das Antriebsritzel um und umso höher sind die auf die Planeten wirkenden Fliehkräfte. Insbesondere bei fliegend am Planetenträger gelagerten Planeten kann es vorkommen, dass sich die Planeten bei zu hohen Antriebsdrehzahlen lösen können. Um einen zuverlässigen Betrieb des Arbeitsgeräts zu gewährleisten, sind bei noch höheren Antriebsdrehzahlen die Lagerstellen der Planeten am Planetenträger zu ertüchtigen.

Es besteht daher die Aufgabe eine Werkzeugantriebseinheit für ein Schneidmesser eines handgetragenen Arbeitsgeräts und ein handgetragenes Arbeitsgerät mit einer Werkzeugantriebseinheit anzugeben, die kompakt und leicht ist und gleichzeitig eine hohe Leistungsfähigkeit aufweist.

Diese Aufgabe wird bzgl. der Werkzeugantriebseinheit durch die Merkmale des Anspruchs 1 und bzgl. des handgetragenen Arbeitsgeräts durch die Merkmale des Anspruchs 10 gelöst.

Durch den Durchmesserunterschied von ersten Umfangsabschnitt und zweiten Umfangsabschnitt lässt sich in einem in bezüglich einer Rotationsachse des Antriebsritzels identischen radialen Bauraum eine größere Übersetzung realisieren als mit einem einstufigen Planetengetriebe. Als einstufiges Planetengetriebe wird ein Planetengetriebe mit einen einzigen Hohlrad, einem einzigen Planetenträger und Planeten, die mit demselben Umfangsabschnitt sowohl mit dem Hohlrad als auch mit dem Planetenträger in Eingriff stehen, bezeichnet.

Dadurch, dass die Planeten jeweils einen ersten Umfangsabschnitt und einen zweiten Umfangsabschnitt aufweisen und ein erster Durchmesser des ersten Umfangsabschnitts größer als ein zweiter Durchmesser des zweiten Umfangsabschnitts ist und der erste Umfangsabschnitt ausschließlich mit dem Antriebsritzel in Eingriff steht und der zweite Umfangsabschnitt ausschließlich mit dem Hohlrad in Eingriff steht, ist die Umlaufgeschwindigkeit, mit der die Planeten im Hohlrad laufen, gegenüber einer Ausführung, bei der entweder kein erster Umfangsabschnitt vorhanden ist und das Antriebsritzel mit dem zweite Umfangsabschnitt in Eingriff steht, oder kein zweiter Umfangsabschnitt vorhanden ist und das Hohlrad mit dem ersten Umfangsabschnitt in Eingriff steht, reduziert.

Auf diese Weise sind die auf die Lagerung der Planeten wirkenden Fliehkräfte reduziert. Dadurch, dass durch den Durchmessersprung des Planeten eine geringere Umlaufgeschwindigkeit der Planeten bei gleicher Antriebsdrehzahl des Antriebsritzels realisierbar ist, lässt sich auch ohne Ertüchtigung der Lagerung der Planeten die Antriebsdrehzahl des Antriebsritzel weiter erhöhen, bis die gleichen Fliehkräfte an dem Planeten anliegen wie zuvor.

Dadurch, dass das Planetengetriebe lediglich ein einziges Hohlrad und einen einzigen Planetenträger besitzt, ist es gegenüber Planetengetrieben mit mehreren Sätzen an Hohlrädern und Planetenträgern leichter. Die ist zwar für die Ergonomie vorteilhaft, jedoch ist dadurch auch die im System befindliche Trägheitsenergie reduziert. Erfindungsgemäß ist mit dem Antriebsritzel eine Schwungmasse drehfest verbunden ist, dadurch erfährt die Schwungmasse die maximal im System vorhandene Winkelgeschwindigkeit. Unter einer drehfesten Verbindung wird eine formschlüssige und/oder stoffschlüssige und/oder kraftschlüssige mittelbare oder unmittelbare Verbindung zweier Teile verstanden, die keine Relativdrehung beider Teile zueinander zulässt. Zwei integral an einem Bauteil ausgebildete Abschnitte gelten ebenfalls als drehfest miteinander verbunden.

Dadurch, dass die Winkelgeschwindigkeit quadratisch in die gespeicherte Rotationsenergie eingeht und die entfallenen Massen nicht mit der Antriebsdrehzahl rotieren, genügt - vereinfacht betrachtet - eine Schwungmasse mit einer geringeren Masse, als die Masse der entfallenen rotierenden Massen, um eine vergleichbare Rotationsenergie bereitzustellen.

Dadurch, dass die Antriebsdrehzahl des Antriebsritzels aufgrund der gestuften Planeten ohne Ertüchtigung der Lagerstellen der Planeten auch noch weiter erhöht werden kann, lässt sich die speicherbare Energie bei gleicher Schwungmasse wahlweise noch weiter erhöhen, um ein noch leistungsfähigeres Arbeitsgerät zu erhalten, oder die Masse der Schwungmasse reduzieren, um ein noch leichteres Arbeitsgerät zu erhalten.

Die Schwungmasse kann bei einem als Außenläufermotor ausgebildeten Elektromotor vollständig oder teilweise durch den Rotor selbst gebildet sein. Der Rotor ist insbesondere drehfest mit dem Antriebsritzel verbunden. Zusätzlich oder alternativ können weitere Schwungmassen drehfest mit dem Antriebsritzel verbunden sein. In einer Ausführungsform ist vorgesehen, dass das Antriebsritzel einen dritten Umfangsabschnitt und einen vierten Umfangsabschnitt aufweist, wobei der vierte Umfangsabschnitt des Antriebsritzels mit dem ersten Umfangsabschnitt des Planeten in Eingriff steht und wobei der dritte Umfangsabschnitt des Antriebsritzels einen gegenüber dem vierten Umfangsabschnitt des Antriebsritzels vergrößerten Durchmesser aufweist und der dritte Umfangsabschnitt, mindestens teilweise, die Schwungmasse bildet.

Diese Ausführungsform ist besonders wirkungsvoll, wenn der Motor als Innenläufermotor ausgebildet ist und der Rotor des Elektromotors somit selbst nur ein geringes Massenträgheitsmoment - verglichen mit einem entsprechenden Außenläufermotor - besitzt. Das Antriebsritzel ist insbesondere kraftschlüssig und/oder formschlüssig mit dem Rotor verbunden. Auf diese Weise kann die Schwungmasse je nach herzustellendem Arbeitsgerät größer oder kleiner gewählt werden. Der dritte Umfangsabschnitt und der vierte Umfangsabschnitt können integral miteinander ausgebildet sein. Dadurch sind die Schwungmasse des dritten Umfangsabschnitts und der verzahnte vierte Umfangsabschnitt des Antriebsritzels besonders haltbar miteinander verbunden. Zudem kann eine Überdeckung von Rotor und Antriebsritzel reduziert werden. Es kann auch vorgesehen sein, dass der dritte Umfangsabschnitt und der vierte Umfangsabschnitt mittelbar oder unmittelbar miteinander gefügt sind, beispielsweise verpresst oder verklebt sind. Es kann alternativ auch vorgesehen sein, die Schwungmasse separat von dem Antriebsritzel auszubilden, sodass das Antriebsritzel und die Schwungmasse separat mit dem Rotor verbunden sind. Auf diese Weise wird auch eine drehfeste Verbindung von Schwungmasse und Antriebsritzel realisiert, wenn dies auch aufwändiger ist.

In einer Ausführungsform sind der Elektromotor, das Planetengetriebe und die Exzenterwelle koaxial zueinander angeordnet. Das heißt eine Rotationsachse des Elektromotors, eine Zentralachse des Planetengetriebes, die mit der Rotationsachse des Antriebsritzels zusammenfällt, und eine Rotationsachse der Exzenterwelle liegen koaxial zueinander. Das Antriebsritzel ist an dem Rotor des Elektromotors angeordnet. Auf diese Weise lässt sich ein besonders kompakter Aufbau erzielen. Insbesondere weist das Getriebegehäuse einen topfförmigen Getriebeaufnahmeraum und einen Deckel auf, wobei der Deckel den Getriebeaufnahmeraum in einer axialen Richtung abdeckt und insbesondere der Elektromotor am Deckel angeordnet, insbesondere daran gelagert, ist. Dadurch lässt sich eine Werkzeugantriebseinheit bereitstellen, die in sich fertig montiert ist. Zusätzliche Lagerstellen des Elektromotors am Gehäuse des handgetragenen Arbeitsgerätes können entfallen. Auf diese Weise kann auf besonders einfache Weise eine Vibrationsentkopplung der Werkzeugantriebseinheit vom restlichen Arbeitsgerät erfolgen.

Die Begriffe radial und axial beziehen sich, sofern nicht explizit anders angegeben, stets auf die Rotationsachse, um die das Antriebsritzel dreht.

In einem Boden des topfförmigen Getriebeaufnahmeraums ist eine Durchgangsöffnung ausgebildet, durch welche die Exzenterwelle ragt. Die Exzenterwelle trägt an ihrem Umfang mindestens einen Exzenter zum Antrieb des mindestens einen angetriebenen Schneidmessers. Der Exzenter kann integral an der Exzenterwelle ausgebildet sein oder durch andere bekannte Fügeverfahren drehfest mit der Exzenterwelle verbunden sein. Die Exzenterwelle kann integral mit dem Planetenträger ausgebildet sein. Der Boden des Getriebeaufnahmeraums kann beispielsweise durch einen von einer Umfangswand des Getriebeaufnahmeraums abstehenden Kragen gebildet sein oder durch einen in einer umlaufenden Nut der Umfangswand eingesetzten Sicherungsring. Das Hohlrad stützt sich insbesondere einerseits in axialer Richtung an dem Boden des Getriebegehäuses und andererseits in axialer Richtung an dem Deckel des Getriebegehäuses ab. Insbesondere wenn das Antriebsritzel einen dritten Umfangsabschnitt aufweist, wird der Abstand zwischen Deckel und Hohlrad größer. In einer Ausführungsform ist ein Niederhalter zwischen Deckel und Hohlrad angeordnet, um den Abstand zu überbrücken. Auch wenn kein dritter Umfangsabschnitt am Antriebsritzel angeordnet ist, kann ein separat vom Deckel ausgebildeter Niederhalter zweckmäßig sein, um das Hohlrad axial zu fixieren. Der Niederhalter kann ringförmig sein. Es kann auch vorgesehen sein mehrere, insbesondere mindestens drei, einzelne Niederhalter zwischen Hohlrad und Deckel anzuordnen. Auch eine Kombination aus einem dünnen Ring mit diskreten dickeren Stellen kann vorgesehen sein. Der Niederhalter ist insbesondere aus einem Material mit niedrigerer Dichte als der Deckel, insbesondere einem Kunststoffmaterial, hergestellt, sodass das Gewicht der nicht rotierenden Komponenten weiter reduziert wird. Es kann auch vorgesehen sein, an einer dem Deckel zugewandten Stirnseite des Hohlrads einen oder mehrere Vorsprünge integral an dem Hohlrad auszubilden, die den mindestens einen Niederhalter bilden. Dies ist besonders vorteilhaft, wenn das Hohlrad aus einem Kunststoffmaterial gefertigt ist. Auf diese Weise lassen sich das Hohlrad und der Niederhalter gemeinsam, insbesondere in einem Spritzgußverfahren, kostengünstig herstellen.

Das Hohlrad weist insbesondere radial nach außen ragende Vorsprünge auf, mit denen es sich in Umfangsrichtung an axial verlaufenden Nuten der Umfangswand abstützt. Die insbesondere mehreren Niederhalter sind zweckmäßig in den Nuten, insbesondere vollständig in den Nuten, der Umfangswand angeordnet. Auf diese Weise kann der erste Durchmesser des ersten Umfangsabschnitt der Planeten maximiert werden und bis nahe an den Innendurchmesser des topfförmigen Getrieberaums ragen. Gleichzeitig ist sichergestellt, dass die Niederhalter eine ausreichende Dicke haben, um bei axialer Belastung nicht auszuknicken.

In einer Ausführungsform weist das Hohlrad einen fünften Umfangsabschnitt und einen sechsten Umfangsabschnitt auf, wobei der fünfte Umfangsabschnitt mit den zweiten Umfangsabschnitten der Planeten in Eingriff steht und am sechsten Umfangsabschnitt eine Lagerstelle für einen Planetenträger des Planetengetriebes angeordnet ist. Dieser Gedanke stellt einen eigenständigen erfinderischen Gedanken dar. Der Gedanke ist insbesondere unabhängig von der Ausbildung der Planeten mit einem ersten Umfangsabschnitt und einem zweiten Umfangsabschnitt und/oder der Anzahl der Stufen des Planetengetriebes. Für die sichere Lagerung des Hohlrads im Getriebegehäuse wird eine axiale Mindestlänge des Hohlrads benötigt. Die axiale Mindestlänge stellt sicher, dass das Hohlrad nicht an der Verzahnung einreißt und das Hohlrad zuverlässig im Getriebegehäuse zentriert ist. Es wurde jedoch festgestellt, dass die axiale Länge der Verzahnung kleiner sein kann, als die axiale Mindestlänge des Hohlrads. Um einen möglichst kompakten Aufbau zu realisieren wurde am Hohlrad zusätzlich zu dem fünften Umfangsabschnitt, der die Verzahnung trägt, ein sechster Umfangsabschnitt ausgebildet, an dem sich eine Lagestelle zur Lagerung des Planetenträgers mittelbar über das Hohlrad am Getriebegehäuse abstützt. Auf diese Weise wird die axiale Mindestlänge des Hohlrades einerseits für den fünften Umfangsabschnitt, d.h. die Verzahnung, und andererseits den sechsten Umfangsabschnitt, d.h. die Abstützung des Planetenträgers, genutzt. Der fünfte Umfangsabschnitt und der sechste Umfangsabschnitt können insbesondere unterschiedliche Durchmesser aufweisen. Für eine besonders robuste Lagerung des Planetenträgers hat der sechste Umfangsabschnitt insbesondere einen größeren Durchmesser als der fünfte Umfangsabschnitt. Eine derartige Ausführung ist besonders zweckmäßig, wenn die Lagerung des Planetenträgers zugleich eine Lagerstelle der Exzenterwelle bildet. Die an den Schneidmessern im Schnitt auftretenden Kräfte sind dann ebenfalls von dem sechsten Umfangsabschnitt des Hohlrads aufzunehmen.

An den Boden des Getriebeaufnahmeraums grenzt eine Messerkammer, in der die Schneidmesser angeordnet sind. Mindestens ein Schneidmesser ist unmittelbar oder mittelbar durch den Exzenter der Exzenterwelle angetrieben. Insbesondere sind zwei entgegengesetzt angeordnete Exzenter an der Exzenterwelle angerordnet, sodass zwei Schneidmesser entgegengesetzt zueinander angetrieben sind.

In einer Ausführungsform liegt die Übersetzung des Planetengetriebes in einem Wertebereich zwischen 4 und 13, insbesondere zwischen 7 und 10. Dadurch wird ein besonders vorteilhaftes Verhältnis von Bauraum und Gewicht erreicht.

In einer Ausführungsform weist das Getriebegehäuse eine im wesentlichen zylindrische Umfangswand mit einem Innendurchmesser und einer in axialer Richtung gemessenen Länge auf, wobei die Länge höchstens 50%, insbesondere höchstens 45%, des Innendurchmessers beträgt und der Innendurchmesser radial außerhalb eines an der Exzenterwelle angeordneten Exzenters liegt. Das heißt, dass das Getriebegehäuse mindestens den radialen Bauraum einnimmt, der ohnehin von einem im Betrieb befindlichen Exzenter in Anspruch genommen wird. Dafür baut das Getriebegehäuse in axialer Richtung besonders flach. Eine reduzierte axiale Länge des Getriebegehäuses bewirkt, dass der Schwerpunkt des Getriebes näher an die Bewegungsebene der Schneidmesser gelangt. Dies verbessert die Handhabbarkeit, insbesondere Wendigkeit, des Arbeitsgeräts. Dies ist von besonderem Vorteil, wenn der Elektromotor in axialer Richtung am Getriebegehäuse angeordnet ist.

In einer Ausführungsform sind der erste Umfangsabschnitt und der zweite Umfangsabschnitt des Planeten einstückig ausgebildet. Durch die einstückige Ausbildung des ersten Umfangsabschnitts und des zweiten Umfangsabschnitts ist eine zuverlässige Momentenübertragung zwischen beiden Umfangsabschnitten sichergestellt. Auch die korrekte Orientierung der Verzahnung von ersten Umfangsabschnitt und zweiten Umfangsabschnitt zueinander ist dadurch sichergestellt. Insbesondere sind der erste Umfangsabschnitt und der zweite Umfangsabschnitt gemeinsam in einem formgebenden Verfahren, wie beispielsweise Sintern oder Spritzgießen hergestellt. Dadurch lassen sich Planeten mit Umfangsabschnitten unterschiedlicher Durchmesser kostengünstig herstellen, sodass ein Einsatz in einer Werkzeugantriebseinheit für ein Arbeitsgerät wirtschaftlich ist. Innerhalb des Planeten erstreckt sich insbesondere über beide Umfangsabschnitte ein Wälzlager zur Anbindung des Planeten an den Planetenträger.

Weitere Merkmale der Erfindung ergeben sich aus der Beschreibung und der Zeichnung, in der nachstehend im Einzelnen beschriebene Ausführungsbeispiele der Erfindung wiedergegeben sind. Es zeigen:
- Fig. 1: eine perspektivische Ansicht eines Arbeitsgeräts mit einer erfindungsgemäßen Werkzeugantriebseinheit
- Fig. 2: einen Längsschnitt durch die Werkzeugantriebseinheit des Arbeitsgeräts aus Fig. 1 entlang der Schnittlinie II-II in Fig. 3
- Fig. 3: eine Detailansicht des Bereichs Z aus Fig. 2
- Fig. 4: einen Querschnitt durch die Werkzeugantriebseinheit des Arbeitsgeräts aus Fig. 1 entlang der Schnittlinie IV-IV in Fig. 2
- Fig. 5: eine Seitenansicht auf das Arbeitsgerät aus Fig. 1 in einem teilmontierten Zustand.

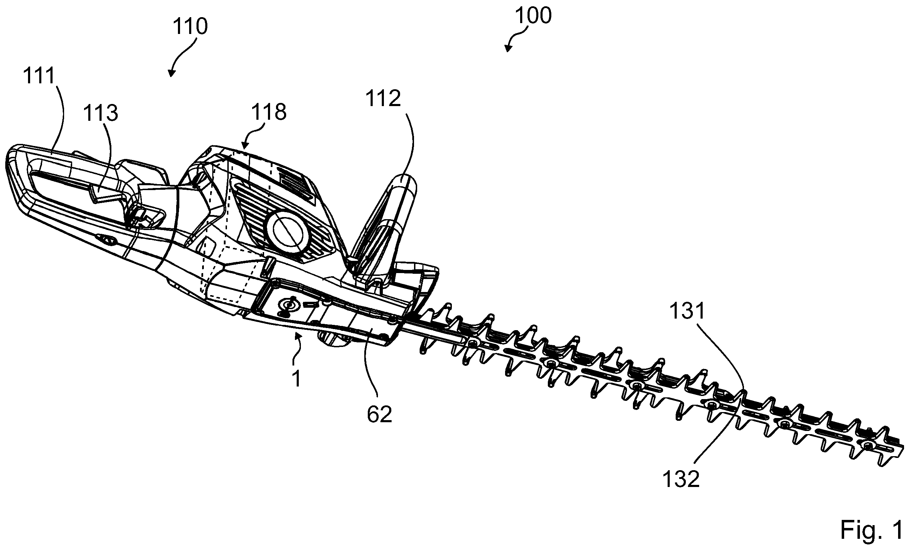

Fig. 1 zeigt ein handgehaltenes Arbeitsgerät 100 in einer beispielhaften Ausführung als Heckenschere. Das Arbeitsgerät 100 umfasst eine Griffeinheit 110 zum Halten und Führen des Arbeitsgeräts 100 und eine Werkzeugantriebseinheit 1 zum Antrieb des Schneidmessers des Arbeitsgeräts 100. Im Ausführungsbeispiel sind an der Griffeinheit 110 ein erster Handgriff 111 mit einem Bedienelement 113 zum Steuern der Werkzeugantriebseinheit 1 und ein zweiter Handgriff 112 angeordnet, zwischen denen eine strichliert dargestellte Aufnahme 118 für einen werkzeuglos entnehmbaren Akkupack als Energiequelle 120 für die Werkzeugantriebseinheit 1 ausgebildet ist. Die Aufnahme 118 kann auch an anderen Stellen der Griffeinheit 110 angeordnet sein, insbesondere unterhalb des hinteren, werkzeugfernen ersten Handgriffs 111. Der Akkupack kann vollständig innerhalb der Aufnahme 118 angeordnet sein oder ganz oder teilweise aus ihr herausragen. Die Werkzeugantriebseinheit 1 ist über nicht dargestellte Antivibrationselemente mit der Griffeinheit 110 verbunden. Auch eine starre Anbindung der Werkzeugantriebseinheit 1 an der Griffeinheit 110 ist möglich.

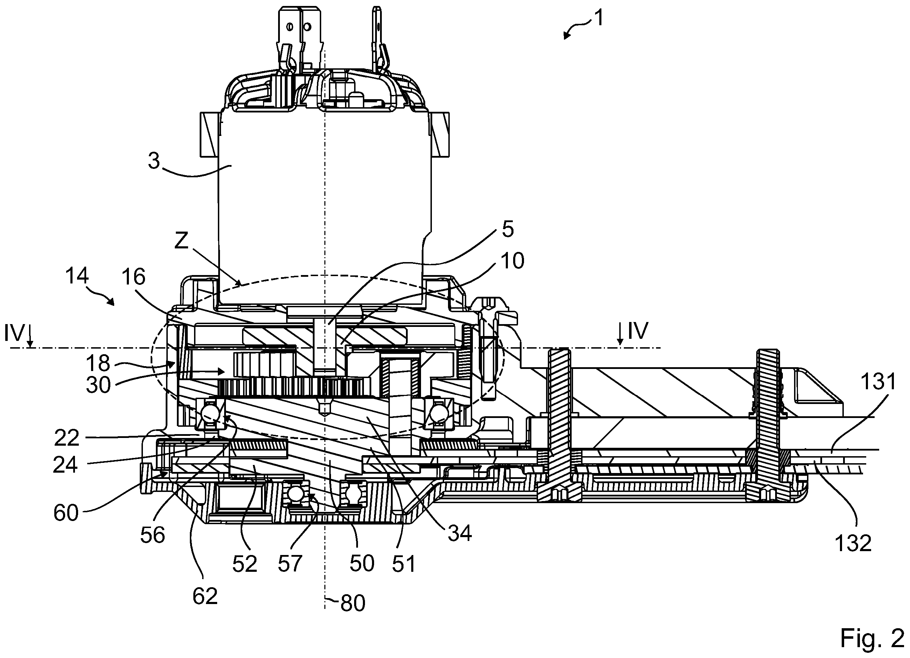

Fig. 2 zeigt die Werkzeugantriebseinheit 1 mit daran angeordneten Schneidmessern 131, 132 des Arbeitsgeräts 100. Die Werkzeugantriebseinheit 1 umfasst ein Getriebegehäuse 14 mit einen topfförmigen Getriebeaufnahmeraum 18 und einem Deckel 16, der den Getriebeaufnahmeraum 18 in einer axialen Richtung abdeckt. Im Getriebeaufnahmeraum 18 ist ein Planetengetriebe 30 angeordnet. Am Deckel 16 ist ein Elektromotor 3 angeordnet, der im Ausführungsbeispiel als Innenläufermotor ausgebildet ist und mit seiner Rotorwelle 5 in den Getriebeaufnahmeraum 18 ragt. Das Antriebsritzel 10 ist auf der Rotorwelle 5 des Elektromotors 3 drehfest angeordnet. Der Elektromotor 3 treibt das Antriebsritzel 10 mit einer Antriebsdrehzahl an. Die Antriebsdrehzahl beträgt insbesondere mindestens 12.000 Umdrehungen pro Minute, insbesondere mindestens 20.000 Umdrehungen pro Minute. An einem Boden 22 des Getriebeaufnahmeraums 18 ist eine Durchgangsöffnung 24 ausgebildet. Durch die Durchgangsöffnung 24 ragt eine Exzenterwelle 50. Die Exzenterwelle 50 wird von einem Planetenträger 34 des Planetengetriebes 30 mit einer Abtriebsdrehzahl angetrieben. Die Exzenterwelle 50 ist an ihrem ersten Ende mittelbar durch den Planetenträger 34 an einer ersten Lagerstelle 56 am sechsten Umfangsabschnitt 46 des Hohlrads 36 abgestützt. Die Exzenterwelle 50 ist an ihrem zweiten Ende an einer zweiten Lagerstelle 57 abgestützt. Die Rotorwelle 5 und die Exzenterwelle 50 liegen koaxial zu einer Zentralachse 80 des Planetengetriebes 30. Die Rotationsachse des Antriebsritzels 10 bildet die Zentralachse 80 des Planetengetriebes 30.

Auf der Exzenterwelle 50 sind zwischen der ersten Lagerstelle 56 und der zweiten Lagerstelle 57 Exzenter 51, 52 zum Antrieb der Schneidmesser 131, 132 angeordnet. Im Ausführungsbeispiel sind ein erster Exzenter 51 zum Antrieb eines ersten Schneidmessers 131 und ein zweiter Exzenter 52 zum Antrieb eines zweiten Schneidmessers 132 auf der Exzenterwelle 50 angeordnet. Im Ausführungsbeispiel sind die Exzenterwelle 50, der erste Exzenter 51, der zweite Exzenter 52 und der Planetenträger 34 einteilig miteinander ausgebildet. Es ist aber auch möglich, einen oder beide Exzenter 51, 52 separat von der Exzenterwelle 50 auszubilden und stattdessen drehfest mit ihr zu verbinden. Unabhängig oder ergänzend dazu ist es möglich, die Exzenterwelle 50 separat von dem Planetenträger 34 auszubilden und stattdessen drehfest mit ihm zu verbinden. Die zweite Lagerstelle 57 der Exzenterwelle 50 ist in einem zweiten Deckel 62 angeordnet. Der zweite Deckel 62 verschließt eine Messerkammer 60. In der Messerkammer 60 befinden sich der erste Exzenter 51 und der zweite Exzenter 52 und jeweils ein an deren Umfang angeordnetes Antriebsende des ersten Schneidmessers 131 bzw. des zweiten Schneidmessers 132.

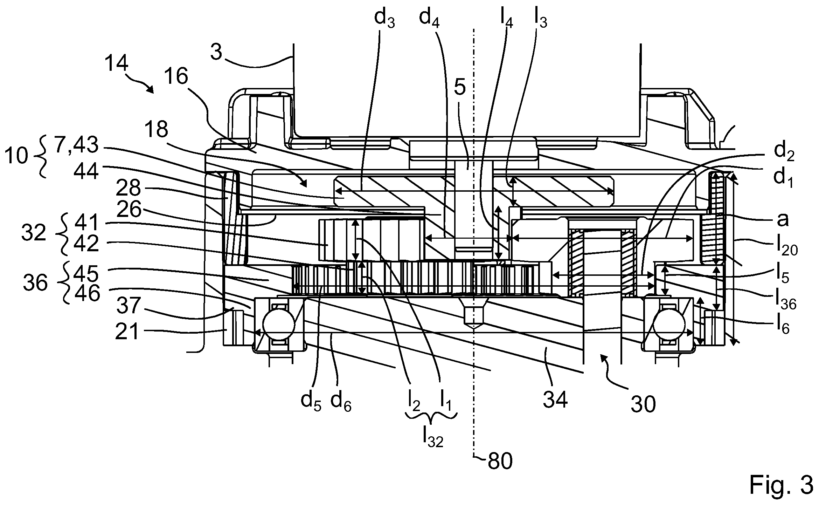

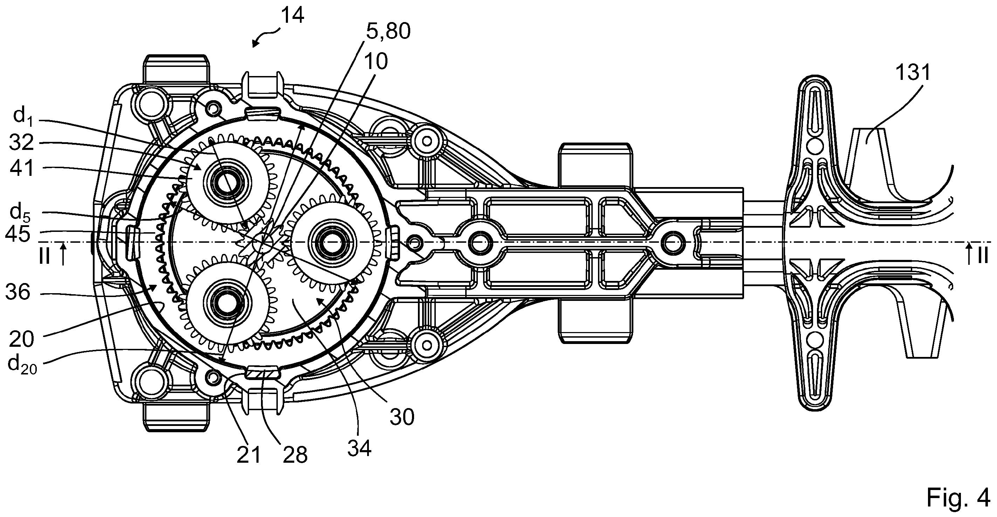

Fig. 3 zeigt das Planetengetriebe 30 aus Fig. 2 im Detail. Das Planetengetriebe 30 wird von einem Antriebsritzel 10 angetrieben. Das Antriebsritzel 10 sitzt auf der Rotorwelle 5 des Elektromotors 3. Im Ausführungsbeispiel besitzt das Planetengetriebe 30 drei Planeten 32 (Fig. 4). Auch eine andere Anzahl an Planeten 32 kann zweckmäßig sein. Die Planeten 32 weisen jeweils einen ersten Umfangsabschnitt 41 und einen zweiten Umfangsabschnitt 42 auf. Ein erster Durchmesser d₁ des ersten Umfangsabschnitts 41 ist größer als ein zweiter Durchmesser d₂ des zweiten Umfangsabschnitts 42. Der erste Umfangsabschnitt 41 des Planeten 32 wird von dem Antriebsritzel 10 angetrieben. Der zweite Umfangsabschnitt 42 des Planeten 32 kämmt mit einem fünften Umfangsabschnitt 45 eines Hohlrads 36 des Planetengetriebes 30. Das Hohlrad 36 weist am fünften Umfangsabschnitt 45 einen Innendurchmesser d₅ auf. Das Hohlrad 36 umfasst einen sechsten Umfangsabschnitt 46, an dessen Innendurchmesser d₆ die erste Lagerstelle 56 der Exzenterwelle 50 ausgebildet ist. An einem Außenumfang des Hohlrads 36 sind Vorsprünge 37 am Hohlrad 36 ausgebildet, durch welche das Hohlrad 36 im Getriebeaufnahmeraum 18 zentriert und gegen Rotation gegenüber dem Getriebegehäuse 14 fixiert ist. In der Umfangswand 20 des Getriebeaufnahmeraums 18 sind Nuten 21 (Fig. 4) angeordnet, in welche die Vorsprünge 37 ragen. Das Hohlrad 36 wird in axialer Richtung durch Niederhalter 28 fixiert. Die Niederhalter 28 überbrücken einen axialen Abstand a zwischen dem Deckel 16 und einer dem Deckel zugewandten Stirnseite des Hohlrads 36. Die Niederhalter 28 sind in den Nuten 21 des Getriebegehäuses 14 angeordnet. Die Niederhalter 28 sind im Ausführungsbeispiel aus einem Kunststoffmaterial gefertigt. Das Hohlrad 36 ist insbesondere aus einem Kunststoffmaterial gefertigt. Auch wenn im Ausführungsbeispiel separat vom Hohlrad 36 ausgebildete Niederhalter 28 gezeigt sind, so ist es ohne weiteres möglich, diese integral mit dem Hohlrad auszubilden. Die für die separaten Niederhalter 28 beschriebenen Eigenschaften gelten auch für integral mit dem Hohlrad ausgebildete Niederhalter.

Im Ausführungsbeispiel weist das Antriebsritzel 10 einen dritten Umfangsabschnitt 43 und einen vierten Umfangsabschnitt 44 auf. Der vierte Umfangsabschnitt 44 kämmt mit den Planeten 32. Der dritte Umfangsabschnitt 43 hat einen gegenüber dem Durchmesser d₄ des vierten Umfangsabschnitts 44 vergrößerten Durchmesser d₃ und ist als Schwungmasse 7 ausgebildet. Der dritte Umfangsabschnitt 43 und der vierte Umfangsabschnitt 44 sind drehfest miteinander verbunden. Im Ausführungsbeispiel sind der dritte Umfangsabschnitt 43 und der vierte Umfangsabschnitt 44 als materialeinheitliches Bauteil ausgebildet. Es kann auch vorgesehen sein, dass der dritte Umfangsabschnitt 43 und der vierte Umfangsabschnitt 44 miteinander gefügt sind, um das Antriebsritzel 10 zu bilden. Das Antriebsritzel 10 ist im Getriebegehäuse 14 angeordnet. Eine Anlaufscheibe 26 trennt den Getriebeaufnahmeraum 18 derart, dass das Planetengetriebe 30 und die Schwungmasse 7 auf unterschiedlichen Seiten der Anlaufscheibe 26 angeordnet sind. Die Schwungmasse 7 ist zwischen dem Deckel 16 und der Anlaufscheibe 26 angeordnet. Der dritte Umfangsabschnitt 43 weist eine axiale Länge l₃ auf, die vollständig zwischen dem Deckel 16 und der Anlaufscheibe 26 angeordnet ist. Die Anlaufscheibe 26 liegt auf einem Absatz des Niederhalters 28 auf. Der Deckel 16 weist einen, insbesondere umlaufenden, Kragen auf gegen den die Anlaufscheibe 26 anliegt. Die Anlaufscheibe 26 ist insbesondere zwischen Niederhalter 28 und Kragen geklemmt.

Im Ausführungsbeispiel sind der erste Umfangsabschnitt 41 und der zweite Umfangsabschnitt 42 des Planeten 32 einstückig, insbesondere materialeinheitlich, ausgebildet. Der Planet 32 ist durch ein Sinterverfahren hergestellt. Im Inneren des Planeten 32 erstreckt sich ein Wälzlager über den ersten Umfangsabschnitt 41 und den zweiten Umfangsabschnitt 42 mit dem der Planet 32 drehbar am Planetenträger 34 angebunden ist.

An dem ersten Umfangsabschnitt 41 und dem zweiten Umfangsabschnitt 42 des Planeten 32 sowie den damit wechselwirkendem vierten Umfangsabschnitt 44 des Antriebsritzels 10 bzw. dem fünften Umfangsabschnitt 45 des Hohlrads 36 sind jeweils Verzahnungen ausgebildet.

Die Zähnezahl des vierten Umfangsabschnitts 44 liegt insbesondere zwischen 7 und 20, ganz insbesondere zwischen 10 und 15, im Ausführungsbeispiel beträgt sie 13. Die Zähnezahl des ersten Umfangsabschnitts 41 liegt insbesondere zwischen 15 und 40, ganz insbesondere zwischen 23 und 33, im Ausführungsbeispiel beträgt sie 28. Die Zähnezahl des zweiten Umfangsabschnitts 42 liegt insbesondere zwischen 10 und 26, ganz insbesondere zwischen 15 und 22, im Ausführungsbeispiel beträgt sie 18. Die Zähnezahl des fünften Umfangsabschnitts 45 liegt insbesondere zwischen 30 und 90, ganz insbesondere zwischen 48 und 72, im Ausführungsbeispiel beträgt sie 61. Die Zähnezahlen sind hierbei derart aufeinander abgestimmt, dass sich eine Übersetzung des Planetengetriebes 30 zwischen 7 und 10 ergibt. Im Ausführungsbeispiel weist das Planetengetriebe 30 eine Übersetzung von circa 8 auf.

Im Ausführungsbeispiel beträgt der Innendurchmesser d₂₀ (Fig. 4) der Umfangswand 20 des Getriebeaufnahmeraums 18 circa 60 mm und die axiale Länge l₂₀ der Umfangswand 20 des Getriebeaufnahmeraums 18 beträgt circa 24 mm. Die axiale Länge l₂₀ der Umfangswand 20 beträgt demnach circa 40% des Innendurchmessers d₂₀ der Umfangswand 20. Dadurch ist das Getriebegehäuse 14 besonders flach.

Die Planeten 32 haben eine axiale Länge l₃₂, die höchsten 50% des ersten Durchmessers d₁ entspricht. Dadurch sind die Planeten 32 besonders flach. Die axiale Länge des fünften Umfangsabschnitts 45 des Hohlrads 36 beträgt höchstens 10% des Innendurchmessers d₅ des Hohlrads 36 am fünften Umfangsabschnitt 45. Dadurch ist der fünfte Umfangsabschnitt 45 besonders flach. Das Hohlrad 36 besitzt eine axiale Mindestlänge l₃₆ zur Abstützung am Getriebegehäuse 14. Die axiale Mindestlänge l₃₆ ist größer als die axiale Länge l₅ des fünften Umfangsabschnitts 45. Die axiale Länge l₅ des fünften Umfangsabschnitt 45 ist insbesondere kürzer als die axiale Länge l₁ des ersten Umfangsabschnitts 41, die axiale Länge l₂ des zweiten Umfangsabschnitts 42, die axiale Länge l₄ des vierten Umfangsabschnitts 44 und/oder die axiale Länge l₆ des sechsten Umfangsabschnitts 46. Zumindest ein Teil der axialen Länge l₆ des sechsten Umfangsabschnitt 46 trägt zur Abstützung am Getriebegehäuse 14 bei. Der sechste Umfangsabschnitt 46 des Hohlrads 36 umgibt den Planetenträger 34. Auf diese Weise wird derselbe axiale Bauraum besonders effizient zur Abstützung sowohl des Hohlrads 36 als auch des Planetenträgers 34 am Getriebegehäuse 14 genutzt. Dadurch ist das Planetengetriebe 30 besonders flach ausgebildet.

Fig. 4 zeigt einen Teil der Werkzeugantriebseinheit 1 in Blickrichtung entlang der Zentralachse 80 unmittelbar unter der Anlaufscheibe 26. Die ersten Umfangsabschnitte 41 der im Ausführungsbeispiel drei Planeten 32 kämmen mit dem vierten Umfangsabschnitt 44 des Antriebsritzels 10. In der Umfangswand 20 des Getriebegehäuses 14 sind die Nuten 21 zur Aufnahme der Niederhalter 28 angeordnet. Im Ausführungsbeispiel sind vier Nuten 21 vorgesehen, auch eine andere Anzahl an Nuten, insbesondere drei, kann zweckmäßig sein. Die Nuten 21 sind insbesondere in einem gleichmäßigen Winkelabstand über den Umfang der Umfangswand 20 verteilt. Durch die Aufnahme der Niederhalter 28 in den Nuten 21, kann der erste Durchmesser d₁ des ersten Umfangsabschnitts 41 des Planeten 32 maximiert werden, ohne dass der Planet 32 beim Umlaufen mit dem Niederhalter 28 kollidiert.

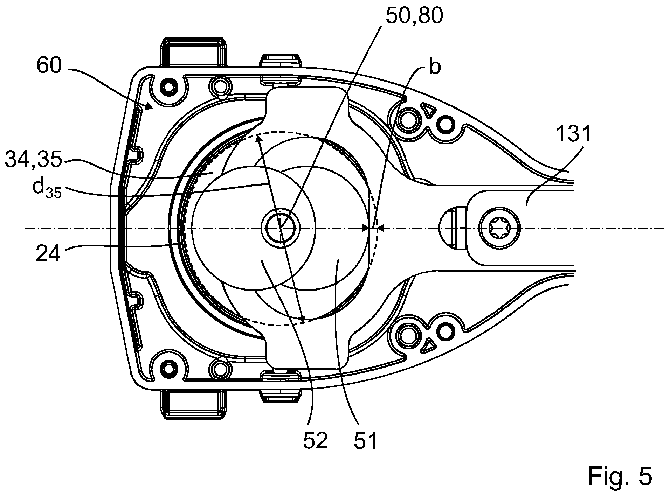

Fig. 5 zeigt die Messerkammer 60 in Blickrichtung entlang der Zentralachse 80 in einem teilmontierten Zustand der Werkzeugantriebseinheit 1. Der zweite Deckel 62 und das zweite Schneidmesser 132 sind abgenommen. Wie zu sehen ist, liegt der erste Exzenter 51 an dem Antriebsende des ersten Schneidmessers 131 an. In der Darstellung befindet sich das erste Schneidmesser 131 in einer Endlage und würde sich bei weiterer Rotation der Exzenterwelle 50 wieder näher zur Zentralachse 80 bewegen. Eine dem ersten Exzenter 51 zugewandte Stirnseite 35 des Planetenträgers 34 steht radial in jeder Richtung über den ersten Exzenter 51 über. Auch in den Endlagen ist ein Mindestüberstand b der Stirnseite 35 zum ersten Exzenter 51 vorhanden. Dadurch dient die Stirnseite 35, unabhängig davon in welcher Stellung sich der erste Exzenter 51 befindet, als Abstützfläche für das Antriebsende des ersten Schneidmessers 131. Der Durchmesser d₃₅ der Stirnseite 35 ist strichliert eingezeichnet, sodass sichtbar wird, dass sich das erste Schneidmesser 131 stets, also auch in den Endlagen, am Planetenträger 34 abstützen kann. Bei einer Blockade des Schneidmessers 131 ist damit zuverlässig sichergestellt, dass sich das Antriebsende des ersten Schneidmessers 131 nicht axial von dem Umfang des ersten Exzenters 51 abheben kann. Der gegenüber dem Stand der Technik vergrößerte Durchmesser d₃₅ der Stirnseite 35 des Planetenträgers 34 stützt das Antriebsende axial und vermeidet so ein Lösen des Antriebsendes vom Exzenter 51. Auf zusätzliche Sicherungsmittel, die das erste Schneidmesser 131 axial in Position halten und ein Abrutschen vom ersten Exzenter 51 vermeiden, kann verzichtet werden. Die Gestaltung des Planetenträgers 34 mit einem Durchmesser d₃₅ der Stirnseite 35, der radial vollständig außerhalb des ersten Exzenters 51 liegt und somit eine Abstützfläche für ein Antriebsende eines ersten Schneidmessers 131 bildet, stellt einen eigenständigen erfinderischen Gedanken dar, der auch unabhängig von der übrigen Gestaltung des Planetengetriebes 30 umgesetzt werden kann. Insbesondere kann ein derart gestalteter Planetenträger auch bei einem mehrstufigen Planetengetriebe in der letzten Stufe, d.h. getriebeausgangsseitig, eingesetzt werden.

Das handgehaltene Arbeitsgerät kann auch Schneidmesser aufweisen, die anstelle einer oszillierenden translatorischen Relativbewegung eine oszillierende rotatorische Relativbewegung zueinander ausführen. Hierbei wird mindestens ein Schneidmesser mittelbar durch die Exzenterwelle angetrieben.

## Patentansprüche

1. Werkzeugantriebseinheit (1) für ein Schneidmesser (131,132) eines handgehaltenen Arbeitsgeräts (100), umfassend
- einen Elektromotor (3), der ausbildet ist, ein Antriebsritzel (10) mit einer Antriebsdrehzahl zu rotieren,
- ein Getriebegehäuse (14),
- ein im Getriebegehäuse (14) angeordnetes Planetengetriebe (30), mit einem einzigen Hohlrad (36), einem einzigen Planetenträger (34) und Planeten (32), die durch das Antriebsritzel (10) angetrieben sind,
- eine Exzenterwelle (50), die durch das Planetengetriebe (30) mit einer Abtriebsdrehzahl angetrieben ist und ausgebildet ist mindestens ein Schneidwerkzeug (131,132) oszillierend anzutreiben,
**dadurch gekennzeichnet, dass**
- die Planeten (32) jeweils einen ersten Umfangsabschnitt (41) und einen zweiten Umfangsabschnitt (42) aufweisen, wobei ein erster Durchmesser (d₁₎ des ersten Umfangsabschnitts (41) größer als ein zweiter Durchmesser (d₂) des zweiten Umfangsabschnitts (42) ist, wobei der erste Umfangsabschnitt (41) ausschließlich mit dem Antriebsritzel (10) in Eingriff steht und der zweite Umfangsabschnitt (42) ausschließlich mit dem Hohlrad (36) in Eingriff steht,
- und dass die Werkzeugantriebseinheit (1) eine Schwungmasse (7) aufweist, die mit dem Antriebsritzel (10) drehfest verbunden ist.

2. Werkzeugantriebseinheit (1) nach Anspruch 1,
**dadurch gekennzeichnet, dass** das Antriebsritzel (10) einen dritten Umfangsabschnitt (43) und einen vierten Umfangsabschnitt (44) aufweist, wobei der vierte Umfangsabschnitt (44) mit dem ersten Umfangsabschnitt (41) in Eingriff steht und wobei der dritte Umfangsabschnitt (43) einen gegenüber dem vierten Umfangsabschnitt (44) vergrößerten Durchmesser (d₃) aufweist und der dritte Umfangsabschnitt (43), mindestens teilweise, die Schwungmasse (7) bildet.

3. Werkzeugantriebseinheit (1) nach einem der vorhergehenden Ansprüche, **dadurch gekennzeichnet, dass** der Elektromotor (3), das Planetengetriebe (30) und die Exzenterwelle (50) koaxial zueinander angeordnet sind.

4. Werkzeugantriebseinheit (1) nach einem der vorhergehenden Ansprüche, **dadurch gekennzeichnet, dass** das Getriebegehäuse (14) einen topfförmigen Getriebeaufnahmeraum (18) und einen Deckel (16) aufweist, wobei der Deckel (16) den Getriebeaufnahmeraum (18) in einer axialen Richtung abdeckt und insbesondere der Elektromotor (3) am Deckel (16) angeordnet ist.

5. Werkzeugantriebseinheit (1) nach Anspruch 4,
**dadurch gekennzeichnet, dass** das Hohlrad (36) einen Abstand (a) zum Deckel (16) aufweist und der Abstand (a) durch einen Niederhalter (28) überbrückt wird.

6. Werkzeugantriebseinheit (1) nach einem der vorhergehenden Ansprüche, **dadurch gekennzeichnet, dass** das Hohlrad (36) einen fünften Umfangsabschnitt (45) und einen sechsten Umfangsabschnitt (46) aufweist, wobei der fünfte Umfangsabschnitt (45) mit den zweiten Umfangsabschnitten (42) der Planeten (32) in Eingriff steht, und am sechsten Umfangsabschnitt (46) eine Lagerstelle (56) für einen Planetenträger (34) des Planetengetriebes (30) angeordnet ist.

7. Werkzeugantriebseinheit (1) nach einem der vorhergehenden Ansprüche, **dadurch gekennzeichnet, dass** die Übersetzung des Planetengetriebes (30) in einen Wertebereich zwischen 4 und 13, insbesondere 7 und 10, liegt.

8. Werkzeugantriebseinheit (1) nach einem der vorhergehenden Ansprüche, **dadurch gekennzeichnet, dass** das Getriebegehäuse (14) eine im wesentlichen zylindrische Umfangswand (20) mit einem Innendurchmesser (d₂₀) und einer in axialer Richtung gemessenen Länge (l₂₀) aufweist, wobei die Länge (l₂₀) höchstens 50%, insbesondere höchstens 45% des Innendurchmessers (d₂₀) beträgt und der Innendurchmesser (d₂₀) radial außerhalb eines an der Exzenterwelle (50) angeordneten Exzenters (51, 52) liegt.

9. Werkzeugantriebseinheit (1) nach einem der vorhergehenden Ansprüche, **dadurch gekennzeichnet, dass** der erste Umfangsabschnitt (41) und der zweite Umfangsabschnitt (42) einstückig ausgebildet sind.

10. Handgehaltenes Arbeitsgerät (100) umfassend die Werkzeugantriebseinheit (1) nach einem der vorhergehenden Ansprüche, sowie eine Griffeinheit (110) zum Halten und Führen des Arbeitsgeräts (100), eine Energiequelle (120) zur Speisung des Elektromotors (3) und relativ zueinander bewegliche Schneidmesser (131,132), von den mindestens ein Schneidmesser (131,132) durch die Exzenterwelle (50) angetrieben ist.
